# EUROPÄISCHE PATENTSCHRIFT

(11) **EP 1 308 594 B1**
(45) Veröffentlichungstag und Bekanntmachung des Hinweises auf die Patenterteilung: **21.04.2004**
(21) Anmeldenummer: 02021985.3
(22) Anmeldetag: 30.09.2002
(51) Int. Cl.: E05F 5/02

(54) **Dämpfungsvorrichtung für bewegliche Möbelteile**
Damping device for movable furniture parts
Dispositif d'amortissement pour parties de meubles déplaçables

(30) Priorität: 17.10.2001 DE 20117031 U
(43) Veröffentlichungstag der Anmeldung: 07.05.2003
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- EP-A- 1 076 145
- DE-A- 3 401 427
- DE-U- 20 107 426
- FR-A- 2 267 439
- US-A- 1 730 646

## Beschreibung

Die Erfindung betrifft eine Dämpfungsvorrichtung für bewegliche Möbelteile wie beispielsweise Türen oder Schubladen, bestehend aus einem mit einem fließfähigen Medium gefüllten Zylinder, das von einem Kolben verdrängt wird, der von einer Feder in seine ausgefahrene Stellung beaufschlagt ist.

Aus der FR-A 22 67 439 ist ein Türdämpfer bekannt, der aus einem zweistufigen Teleskopzylinder besteht, wobei der in dem feststehenden Zylinder verschieblich geführte Zylinder und der in dem verschieblichen Zylinder geführte Kolben jeweils durch wendelförmige Druckfedern auf der Bodenplatte des feststehenden Zylinders abgestützt sind. Die Dämpfungswirkung wird über die wendelförmigen Druckfedern erreicht. Die in den Zylinderräumen befindliche Luft dient nur in vernachlässigbarer Weise der Dämpfung, da zwischen dem feststehenden Zylinder und dem beweglichen Zylinder sowie dem beweglichen Zylinder und dem Kolben keine Dichtungen angeordnet sind, so dass die Luft beim Zusammendrücken des Teleskopzylinders ohne nennenswerte Drosselwirkung entweichen kann.

Bei einer aus EP 1 006 251 A2 bekannten Dämpfungsvorrichtung dieser Art ist der Kolben mit einer Kolbenstange versehen, die eine die zu dämpfenden Stöße aufnehmende Kappe trägt. Diese bekannte Dämpfungsvorrichtung weist eine verhältnismäßig große Baulänge auf, so daß sie sich grundsätzlich nur an der Innenseite einer Wand eines Korpusteils eines Möbels befestigen läßt, um Schläge von gegen dieses stoßenden Möbelteilen zu dämpfen. Es besteht aber auch ein Bedürfnis, Dämpfungsvorrichtungen zu schaffen, die sich nicht nur an unbeweglichen Korpusteilen, sondern auch an beweglichen Möbelteilen befestigen lassen, um diese bei ihrer Bewegung oder ihrem Anschlagen gegen ortsfeste Möbelteile zur Verhinderung harter Schläge abzubremsen.

Aufgabe der Erfindung ist es daher, eine Dämpfungsvorrichtung der eingangs angegebenen Art zu schaffen, die sich durch eine geringe Länge bzw. geringe Einbautiefe auszeichnet, so daß sich diese auch an dünneren Möbelteilen, beispielsweise Platten, Türen oder Blenden von Schubladen befestigen läßt.

Erfindungsgemäß wird diese Aufgabe durch eine Dämpfungsvorrichtung mit den Merkmalen des Anspruchs 1 sowie durch eine Dämpfungsvorrichtung mit den Merkmalen des Anspruchs 7 gelöst. Vorteilhafte Ausgestaltungen der Erfindung sind Gegenstand der Unteransprüche. Der Zylinder der erfindungsgemäßen Dämfpungsvorrichtung ist ein mindestens zweistufiger Teleskopzylinder und eine Druckfeder ist zwischen dem Boden des äußeren Zylinders der letzten Stufe und dem Kolben der ersten Stufe eingespannt.

Durch die erfindungsgemäße Ausbildung läßt sich die Dämpfungsvorrichtung beispielsweise in eine Sacklochbohrung, wie sie für bewegliche topfförmige Scharnierteile üblich ist, einsetzen, wobei sich die teleskopierbaren Teile auch vollständig ohne Überstand in die Bohrung eindrücken lassen.

Bei der erfindungsgemäßen Dämpfungsvorrichtung ist das Prinzip eines Teleskopzylinders in der Weise verwirklicht, daß in dem Zylinder der letzten Stufe ein Zylinder geführt ist, in dem ein Zylinder für die folgende Stufe geführt ist, und so fort bis zu dem Zylinder der ersten Stufe, in dem der Kolben der ersten Stufe geführt ist.

Zweckmäßigerweise besteht die erfindungsgemäße Dämpfungsvorrichtung aus einem zweistufigen Teleskopzylinder, der also nur einen einzigen in dem Grundzylinder geführten teleskopierbaren Zylinder aufweist, in dem der Kolben geführt ist.

Eine besonders kurze Bauweise der erfindungsgemäßen Dämpfungsvorrichtung läßt sich dadurch erreichen, daß der Durchmesser der Zylinder größer ist als deren Länge. Zweckmäßigerweise weist auch der in dem Teleskopzylinder der ersten Stufe geführte Kolben einen Durchmesser auf, der größer ist als dessen Länge mit Kolbenstange.

In weiterer Ausgestaltung der Erfindung ist vorgesehen, daß der Kolben und die verschieblichen Zylinder jeweils mit einem flanschförmigen Rand versehen sind, der sich in der ausgeschobenen Stellung des Teleskopzylinders gegen einen jeweils am äußeren Ende des Grundzylinders und der verschieblichen Zylinder angeordneten und deren Durchmesser beengenden Ringbund anlegt. Die flanschförmigen Ränder sind ringkolbenartig ausgebildet.

Der äußere Zylinder ist zweckmäßigerweise durch eine aufgesetzte Bodenplatte geschlossen, so daß sich die Dämpfungsvorrichtung dadurch montieren läßt, daß zunächst der Kolben in den verschieblichen Zylinder der ersten Stufe und der oder die Zylinder der folgenden Stufen ineinander eingeschoben werden, so daß zur Schlußmontage nach Einlegen der Druckfeder der Grundzylinder nur noch durch die Bodenplatte geschlossen werden muß.

Zweckmäßigerweise ist der Kolben der ersten Stufe oder der mit diesem verbundene Schaft mit einer Stöße aufnehmenden Kappe versehen.

Zweckmäßigerweise bestehen der äußere Zylinder, die verschieblichen Zylinder und der Kolben aus Kunststoffspritzguß- oder Metalldruckgußteilen.

Zweckmäßigerweise ist zur Halterung der Druckfeder die Bodenplatte mit einem zapfenförmigen Vorsprung und der Kolben mit einer Sacklochbohrung versehen.

Besteht das fließfähige Medium aus Luft, sind in Ringnuten der flanschförmigen Ränder Dichtungen, beispielsweise Lippendichtungen eingesetzt, wobei der Kolben der ersten Stufe mit einer axialen Entlüftungsbohrung versehen ist. Durch diese Entlüftungsbohrung kann beim Zusammendrücken des Kolbens und der Teleskopzylinder der Dämpfungsvorrichtung Luft in gedrosselter Form entweichen, so daß die gewünschte Dämpfungswirkung eintritt.

Die Lippendichtungen können einen V- oder U-förmigen Querschnitt besitzen, wobei die dadurch gebildeten V- oder U-förmigen Nuten durch Bohrungen in den äußeren Wandungen der in den flanschförmigen Rändern vorgesehenen Nuten mit den Zylinderräumen in Verbindung stehen. Durch diese Ausgestaltung sind die Nuten der Lippendichtungen mit dem Luftdruck in den Zylinderräumen beaufschlagt, so daß sich die äußeren Schenkel der Nuten, die die Lippendichtungen bilden, entsprechend dem steigenden Innendruck mit größerem Druck an die Wandungen der Zylinder anlegen, in denen diese geführt sind.

Nach einer weiteren bevorzugten Ausführungsform ist vorgesehen, daß auf die Wandungen der zylindrischen Hohlräume ein hochviskoses Fett aufgetragen ist und der Kolben der ersten Stufe mit einer axialen Entlüftungsbohrung versehen ist. Dieses hochviskose Fett dichtet die Zylinderräume ab und ersetzt somit die Dichtungen, bzw. Lippendichtungen, der zuvor beschriebenen Ausführungsform.

Zweckmäßigerweise sind in Ringnuten der Bunde Ringdichtungen eingelegt, die sich dichtend an den Schaft des Kolbens und die Außenseiten der beweglichen Zylinder anlegen.

Ist das fließfähige Medium Öl, sind in die Ringnuten der Bunde Ringdichtungen eingelegt, die die Ringräume zwischen den flanschförmigen Rändern und Bunden abdichten, wobei die flanschförmigen Ränder mit Drosselbohrungen versehen sind. Auch bei dieser Ausführungsform sind in Ringnuten der Bunde Ringdichtungen eingelegt, die sich dichtend an den Schaft des Kolbens und die Außenseiten der beweglichen Zylinder anlegen.

Ausführungsbeispiele der Erfindung werden nachstehend anhand der Zeichnung näher erläutert. In diesen zeigen
- Fig. 1: eine Deck- oder Seitenwand eines Schranks, an der in der Schließstellung eine Tür oder eine Frontblende einer Schublade mit der erfindungsgemäßen Dämpfungsvorrichtung anliegt,
- Fig. 2: einen Schnitt durch eine erste Ausführungsform der erfindungsgemäßen Dämpfungsvorrichtung in ihrer ausgefahrenen Stellung,
- Fig. 3: die Dämpfungsvorrichtung nach Fig. 2 in ihrer in den Grundzylinder eingedrückten Stellung,
- Fig. 4 bis 10: Einzelteile der Dämpfungsvorrichtung nach den Fig. 2 und 3,
- Fig. 11 u. 12: eine den Fig. 2 und 3 entsprechende Darstellung einer zweiten Ausführungsform der erfindungsgemäßen Dämpfungsvorrichtung,
- Fig. 13 bis 17: Einzelteile der Dämpfungsvorrichtung nach den Fig. 11 und 12,
- Fig. 18 u. 19: eine der Fig. 2 und 3 entsprechende Darstellung einer dritten Ausführungsform der erfindungsgemäßen Dämpfungsvorrichtung und
- Fig. 20 bis 24: Einzelteile der Dämpfungsvorrichtung nach den Fig. 18 und 19.

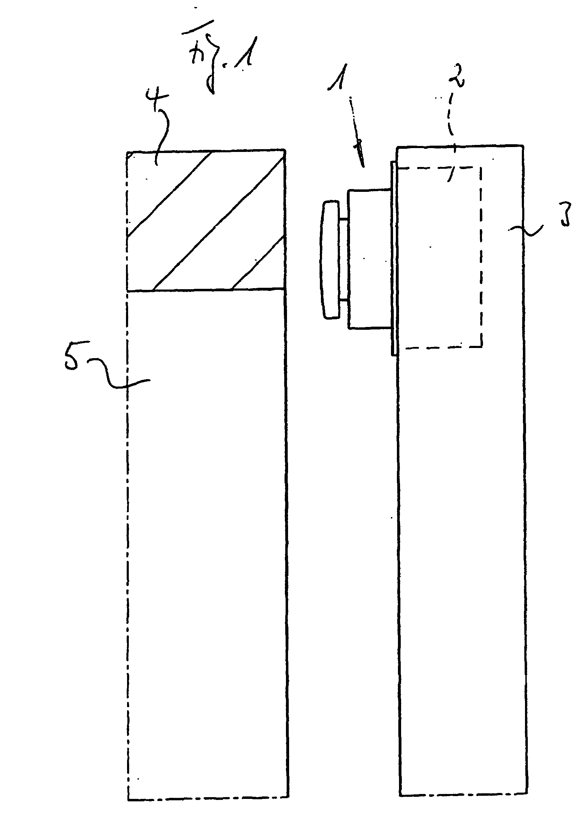

Aus Fig. 1 ist eine erfindungsgemäße Dämpfungsvorrichtung 1 ersichtlich, die in eine Sacklochbohrung 2 einer Tür, Klappe oder Schubladenblende 3 eingesetzt ist, und zwar in einer Stellung, in der sie sich kurz vor dem Anschlagen gegen die Stirnfläche einer Wand 4 eines Schrankkorpus o. dgl. befindet.

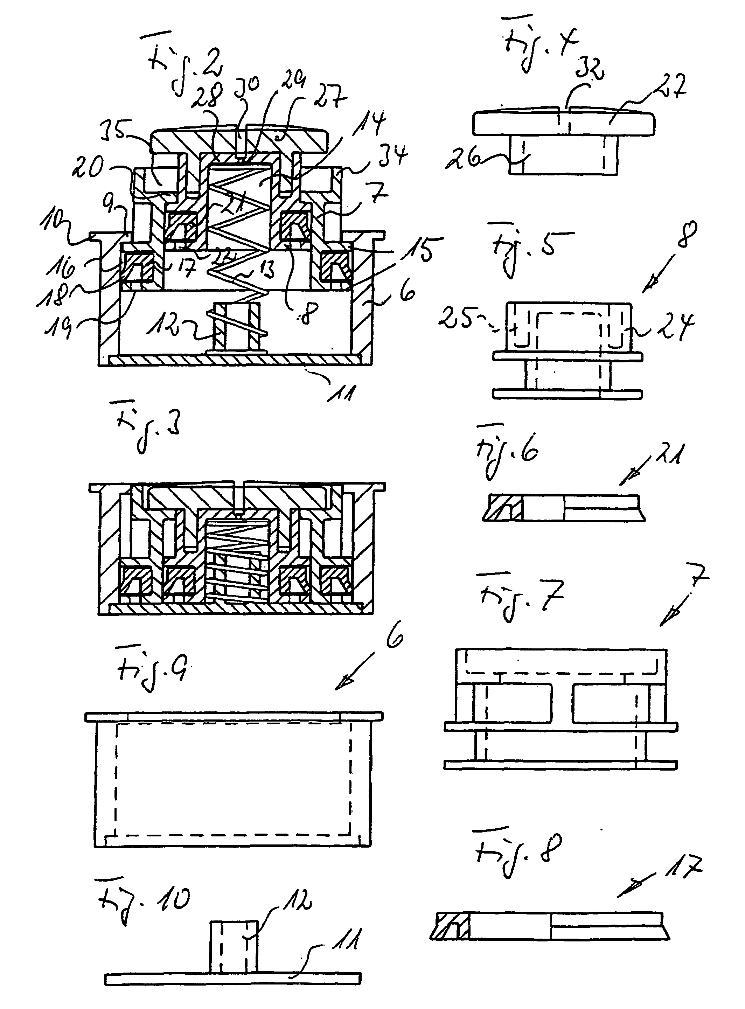

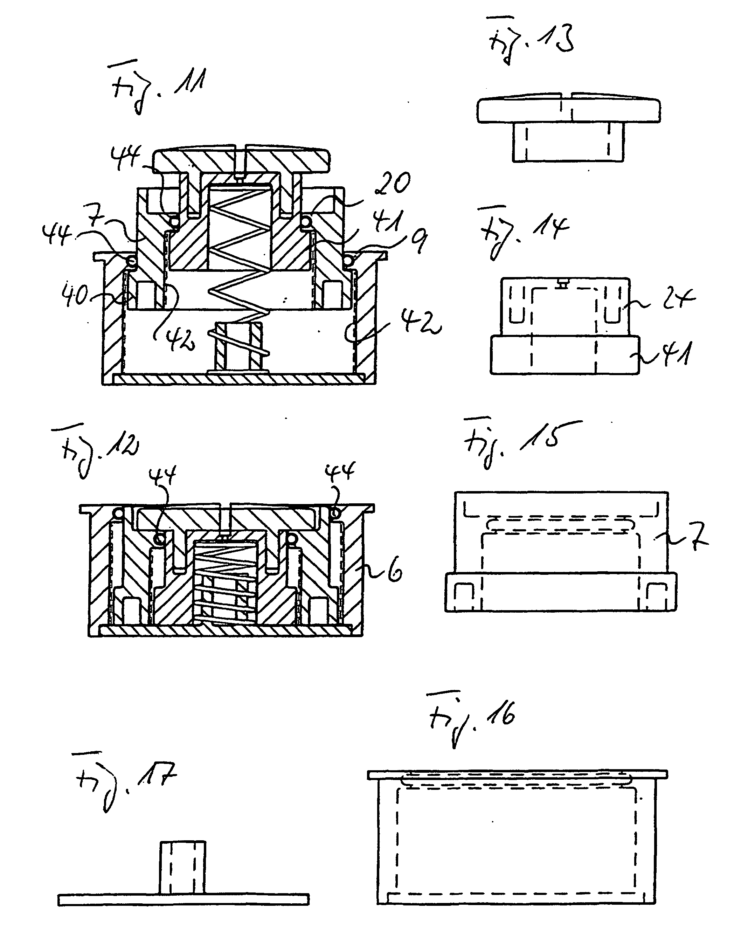

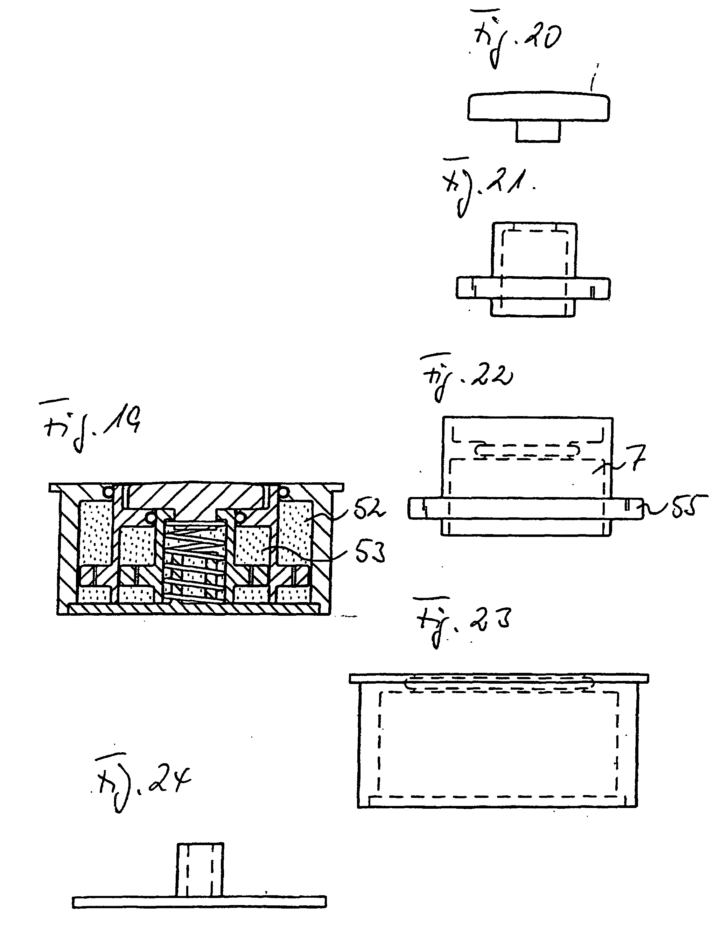

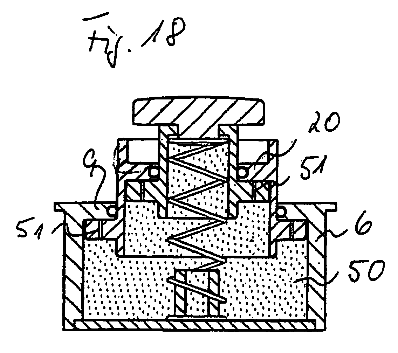

Aus den Fig. 2 bis 10 ist eine erste Ausführungsform der erfindungsgemäßen Dämpfungsvorrichtung ersichtlich. Diese besteht aus einem Grundzylinder 6, in dem ein teleskopierbarer Zylinder 7 verschieblich geführt ist, wobei in diesem der Kolben 8 verschieblich geführt ist.

Der Grundzylinder 6 besteht aus einem zylindrischen Rohrabschnitt, dessen Durchmesser größer ist als dessen Länge. An ihrem oberen Rand ist der Grundzylinder mit einem nach innen ragenden ringförmigen Bund 9 und einem umlaufenden Flansch 10 versehen, mit dem sich dieser auf den Rand der Bohrung oder Sacklochbohrung abstützt, in die er einsetzbar ist. Der Flansch 10 kann mit ohrenförmigen Fortsetzungen versehen sein, die Bohrungen zur Aufnahme von Befestigungsschrauben aufweisen.

An seinem unteren Ende weist der Grundzylinder 6 eine Ringstufe auf, in die eine Bodenplatte 11 eingesetzt ist, die mit dem Grundzylinder beispielsweise durch eine Ultraschallschweißung verbunden sein kann, wenn diese aus Kunststoff bestehen. Die Bodenplatte 11 trägt mittig einen hohlen Zapfen 12, der der Halterung des unteren Endes einer Druckfeder 13 dient, deren oberes Ende in einem Sackloch 14 des Kolbens 8 gehaltert ist.

In dem Zylinder 6 ist der bewegliche Zylinder 7 geführt. Dieser weist an seinem unteren Ende einen flanschförmigen Rand 15 auf, der mit einer umlaufenden Ringnut 16 versehen ist, in die eine ringförmige Lippendichtung 17 eingesetzt ist. Diese Lippendichtung 17 weist einen V-förmigen Querschnitt auf, wobei der äußere Schenkel 18 der dadurch gebildeten Nut dichtend an der Innenwandung des Grundzylinders 6 anliegt. Die untere die Nut 16 begrenzende Wandung ist mit Bohrungen 19 versehen, die in die V-förmige Nut der Lippendichtung 17 münden, so daß in dieser jeweils der Druck der Zylinderkammern herrscht und die Dichtungslippe 18 gegen die Wandung des Zylinders 6 angedrückt wird.

Der bewegliche Zylinder 7 ist an seinem oberen Ende mit einem dessen Durchmesser begrenzenden Ringbund 20 versehen, gegen den sich im ausgefahrenen Zustand der Kolben 8 anlegt. Der Kolben 8 ist in entsprechender Weise wie der bewegliche Zylinder 7 mit einer Ringnut versehen, in die ein Dichtungsring 21 eingelegt ist, deren V-förmige Nut durch eine Bohrung 22 mit dem Zylinderraum in Verbindung steht. Der Kolben 8 ist von einem schaftförmigen Teil 24 getragen, in dessen Stirnseite eine Ringnut 25 eingearbeitet ist, die der Aufnahme und Halterung des rohrförmigen Halteteils 26 der Kappe 27 dient. Die die sacklochartige Ausnehmung 14 begrenzende Deckwandung 28 des Kolbens 8 ist mit einer mittleren Bohrung 29 versehen, die mit einer Bohrung 30 der Kappe 27 fluchtet und eine Drosselbohrung für die aus dem Zylinderraum beim Zusammendrücken der Dämpfungsvorrichtung entweichenden Luft bildet. Um das Entweichen der Luft beim Anstoßen an die Stirnfläche einer Wandung eines Möbelteils nicht zu behindem, mündet die Bohrung 30 in Schlitze 32 der Kappe 27.

Das bewegliche Zylinderteil 7 weist an seinem oberen Ende einen flanschförmigen Rand auf, der einen zylindrischen Ring 34 trägt, so daß ein ringförmiger Aufnahmeraum 35 gebildet ist, in dem beim Zusammendrücken der Dämpfungsvorrichtung die Kappe 27 eintauchen kann.

Wie aus Fig. 3 ersichtlich ist, tauchen im zusammengedrückten Zustand der Dämpfungsvorrichtung sowohl der Kolben 8 mit Kappe 27 als auch der bewegliche Zylinder 7 vollständig in den Grundzylinder 6 ein, so daß die Dämpfungsvorrichtung in einer Sacklochbohrung des in seiner Bewegung zu dämpfenden beweglichen Möbelteils in der Weise angeordnet werden kann, daß im zusammengedrückten Zustand keine Teile über die Fläche des Möbelteils überstehen, in der Dämpfungsvorrichtung versenkt angeordnet ist.

Die Ausführungsform nach den Fig. 11 bis 16 unterscheidet sich von der nach den Fig. 2 bis 8 dadurch, daß der flanschförmige Rand 40 des beweglichen Zylinders 7 und der Kolben 41 statt durch Lippendichtungen dadurch gegenüber den zylindrischen Wandungen in den Grundzylinder und den beweglichen Zylinder abgedichtet sind, daß auf diese ein Fett 42 hoher Viskosität aufgetragen ist.

Weiterhin sind in den nach innen ragenden Ringbunden 9 und 20 des Grundzylinders 6 und des beweglichen Zylinders 7 Ringnuten vorgesehen, in die Dichtungsringe 44 eingelegt sind, die sich dichtend an die Außenseiten des beweglichen Zylinders 7 und des Schaftteils des Kolbens 41 anlegen.

Die Ausführungsform nach den Fig. 18 bis 24 unterscheidet sich von den beiden vorhergehenden dadurch, daß das zu verdrängende flüssige Medium Öl 50 ist. Das in den Zylinderräumen befindliche Öl 50 wird durch Drosselbohrungen 51, die in dem einen Ringkolben bildenden flanschförmigen Rand 55 und dem Rand des Kolbens angebracht sind, in Ringräume 52, 53 verdrängt, die einmal zwischen dem flanschförmigen Rand 55 des beweglichen Zylinders 7 und dem nach innen ragenden Bund 9 des Grundzylinders 6 und andererseits zwischen dem Kolben und dem nach innen ragenden Bund 20 des beweglichen Zylinders 7 gebildet sind. Diese Ringräume 52, 53 sind nach außen hin durch Dichtungsringe 44 abgedichtet, die in der zuvor beschriebenen Weise in Ringnuten der flanschförmigen Ränder 9, 20 eingelegt sind.

## Patentansprüche

1. Dämpfungsvorrichtung (1) für bewegliche Möbelteile (3), wie beispielsweise Türen oder Schubladen, bestehend
aus einem mindestens zweistufigen Teleskopzylinder, der durch Federkraft in seine ausgefahrene Stellung beaufschlagt und mit Luft gefüllt ist, die beim Zusammenschieben des Teleskopzylinders verdrängt wird,
**dadurch gekennzeichnet,**
**dass** eine Druckfeder (13) zwischen dem Boden (11) des äußeren Zylinders (6) der letzten Stufe und dem Kolben (8) der ersten Stufe des Teleskopzylinders eingespannt ist und
**dass** in Ringnuten (16) am unteren Endbereich der verschieblichen Zylinder (7) und des Kolbens (8) oder an den oberen Rändern des äußeren Zylinders (6) und der verschieblichen Zylinder (7) Dichtungen (17, 21, 44) eingesetzt sind, die sich dichtend an die inneren Wandungen des äußeren Zylinders (6) und der verschieblichen Zylinder (7) oder an die äußeren Wandungen der verschieblichen Zylinder (7) und des Kolbens (8) anlegen.

2. Dämpfungsvorrichtung nach Anspruch 1, **dadurch gekennzeichnet, dass** der Kolben (8) der ersten Stufe mit einer axialen Entlüfungsbohrung (29, 30) versehen ist.

3. Dämpfungsvorrichtung nach Anspruch 1 oder 2, **dadurch gekennzeichnet, dass** Dichtungen Lippendichtungen (17, 21) mit einem V- oder U-förmigen Querschnitt sind und die dadurch gebildeten V- oder U-förmigen Nuten der Lippendichtungen durch Bohrungen (19, 22) in den äußeren Wandungen der Nuten mit den Zylinderräumen in Verbindung stehen.

4. Dämpfungsvorrichtung nach einem der Ansprüche 1 bis 3, **dadurch gekennzeichnet, dass** auf die Wandungen der zylindrischen Hohlräume ein hochviskoses Fett (42) aufgetragen und der Kolben der ersten Stufe mit einer axialen Entlüfungsbohrung versehen ist.

5. Dämpfungsvorrichtung nach einem der Ansprüche 1 bis 4, **dadurch gekennzeichnet, dass** der Kolben (8) und die verschieblichen Zylinder (7) jeweils mit einem flanschförmigen Rand versehen sind, der sich in der ausgeschobenen Stellung des Teleskopzylinders gegen einen jeweils am äußeren Ende des äußeren Grundzylinders (6) und der verschieblichen Zylinder (7) vorgesehenen und deren Durchmesser verengenden Ringbund (9, 20) anlegt.

6. Dämpfungsvorrichtung nach einem der Ansprüche 1 bis 5, **dadurch gekennzeichnet, dass** in Ringnuten der Bunde Ringdichtungen (44) eingelegt sind, die sich dichtend an den Schaft (24) des Kolbens (41) und die Außenseiten der beweglichen Zylinder (7) anlegen.

7. Dämpfungsvorrichtung (1) für bewegliche Möbelteile (3), wie beispielsweise Türen oder Schubladen, bestehend aus einem mindestens zweistufigen Teleskopzylinder, der durch Federkraft in seine ausgefahrene Stellung beaufschlagt und mit einem fließfähigen Medium, vorzugsweise Öl, gefüllt ist, das beim Zusammenschieben des Teleskopzylinders verdrängt wird,
**dadurch gekennzeichnet, dass** eine Druckfeder (13) zwischen dem Boden (11) des äußeren Zylinders (6) der letzten Stufe und dem Kolben (8) der ersten Stufe des Teleskopzylinders eingespannt ist,
dass der Kolben und die verschieblichen Zylinder jeweils mit einem flanschförmigen Rand versehen sind, der sich in der ausgeschobenen Stellung des Teleskopzylinders gegen einen jeweils am äußeren Ende des äußeren Grundzylinders (6) und der verschieblichen Zylinder (7) vorgesehenen und deren Durchmesser verengenden Ringbund (9) anlegt, und
dass in Ringnuten der Bunde Ringdichtungen eingelegt sind, die die Ringräume (52, 53) zwischen dem Kolben und den flanschförmigen Rändern und den Bunden abdichten, und
dass die flanschförmigen Ränder mit Drosselbohrungen (51) versehen sind.

8. Dämpfungsvorrichtung nach Anspruch 1, **dadurch gekennzeichnet, dass** der Druchmesser der Zylinder (6, 7) größer ist als deren Länge.

9. Dämpfungsvorrichtung nach einem der vorstehenden Ansprüche, **dadurch gekennzeichnet, dass** der Durchmesser des Kolbens (8) größer ist als dessen Länge mit Kolbenschaft (24).

10. Dämpfungsvorrichtung nach einem der vorstehenden Ansprüche, **dadurch gekennzeichnet, dass** der äußere Grundzylinder (6) durch eine aufgesetzte Bodenplatte (11) geschlossen ist.

11. Dämpfungsvorrichtung nach einem der vorstehenden Ansprüche, **dadurch gekennzeichnet, dass** der Kolben (8) der ersten Stufe oder der mit diesem verbundene Schaft (24) mit einer Stöße aufnehmenden Kappe (27) versehen ist.

12. Dämpfungsvorrichtung nach einem der vorstehenden Ansprüche, **dadurch gekennzeichnet, dass** der äußere Grundzylinder (6), die verschieblichen Zylinder (7) und der Kolben (8) aus Kunststoffspritzguß- oder mit Metalldruckgußteilen bestehen.

13. Dämpfungsvorrichtung nach einem der vorstehenden Ansprüche, **dadurch gekennzeichnet, dass** zur Halterung der Druckfeder (13) die Bodenplatte (11) mit einem zapfenförmigen Vorsprung (12) und der Kolben (8) mit einer Sacklochbohrung (14) versehen ist.

## Claims

1. Damping device (1) for moveable furniture parts (3), such as, for example, doors or drawers, comprising
a telescopic cylinder which has at least two stages, is moved into its extended position by spring force and is filled with air, which is displaced when the telescopic cylinder is pushed together,
**characterized**
**in that** a compression spring (13) is clamped between the bottom (11) of the outer cylinder (6) of the last stage and the piston (8) of the first stage of the telescopic cylinder, and
**in that** seals (17, 21, 44) are inserted into annular grooves (16) in the lower end region of the displaceable cylinders (7) and of the piston (8) or on the upper edges of the outer cylinder (6) and of the displaceable cylinders (7), the seals being put in a sealing manner onto the inner walls of the outer cylinder (6) and of the displaceable cylinders (7) or onto the outer walls of the displaceable cylinders (7) and of the piston (8).

2. Damping device according to Claim 1, **characterized in that** the piston (8) of the first stage is provided with an axial venting bore (29, 30).

3. Damping device according to Claim 1 or 2, **characterized in that** seals are lip seals (17, 21) having a V- or U-shaped cross section, and the resultantly formed V- or U-shaped grooves of the lip seals are connected to the cylinder spaces by bores (19, 22) in the outer walls of the grooves.

4. Damping device according to one of Claims 1 to 3, **characterized in that** a highly viscous grease (42) is applied to the walls of the cylindrical cavities, and the piston of the first stage is provided with an axial venting bore.

5. Damping device according to one of Claims 1 to 4, **characterized in that** the piston (8) and the displaceable cylinders (7) are provided in each case with a flange-like edge which, in the pushed-out position of the telescopic cylinder, is put against an annular collar (9, 20), which is provided in each case at the outer end of the outer basic cylinder (6) and of the displaceable cylinders (7) and contracts the diameters thereof.

6. Damping device according to one of Claims 1 to 5, **characterized in that** annular seals (44) are placed into annular grooves of the collars and are placed in a sealing manner onto the stem (24) of the piston (41) and onto the outer sides of the moveable cylinders (7).

7. Damping device (1) for moveable furniture parts (3), such as, for example, doors or drawers, comprising a telescopic cylinder which has at least two stages, is moved into its extended position by spring force and is filled with a flowable medium, preferably oil, which is displaced when the telescopic cylinder is pushed together, **characterized in that** a compression spring (13) is clamped between the bottom (11) of the outer cylinder (6) of the last stage and the piston (8) of the first stage of the telescopic cylinder,
**in that** the piston and the displaceable cylinders are provided in each case with a flange-like edge which, in the pushed-out position of the telescopic cylinder, is placed against an annular collar (9) which is provided in each case at the outer end of the outer basic cylinder (6) and of the displaceable cylinders (7) and contracts the diameters thereof, and
**in that** annular seals are placed into annular grooves of the collars and seal the annular spaces (52, 53) between the piston and the flange-like edges and the collars, and
**in that** the flange-like edges are provided with throttling bores (51).

8. Damping device according to Claim 1, **characterized in that** the diameter of the cylinders (6, 7) is larger than their length.

9. Damping device according to one of the preceding claims, **characterized in that** the diameter of the piston (8) is larger than its length with the piston stem (24).

10. Damping device according to one of the preceding claims, **characterized in that** the outer basic cylinder (6) is closed by a base plate (11) placed onto it.

11. Damping device according to one of the preceding claims, **characterized in that** the piston (8) of the first stage or the stem (24) which is connected to the said piston is provided with a shock-absorbing cap (27).

12. Damping device according to one of the preceding claims, **characterized in that** the outer basic cylinder (6), the displaceable cylinders (7) and the piston (8) consist of injection-moulded plastic parts or metal die-cast parts.

13. Damping device according to one of the preceding claims, **characterized in that**, in order to secure the compression spring (13), the base plate (11) is provided with a pin-shaped projection (12) and the piston (8) is provided with a blind bore (14).

## Revendications

1. Dispositif d'amortissement (1) pour des parties de meuble mobiles (3), comme par exemple des portes ou des tiroirs, constitué
d'un vérin télescopique à au moins deux étages, qui est sollicité par une force de ressort dans sa position sortie et est rempli d'air qui, lors de l'entrée du vérin télescopique est refoulé,
**caractérisé,**
**en ce qu'**un ressort de pression (13) est mis en tension entre le fond (11) du vérin extérieur (6) du dernier étage et le piston (8) du premier étage du vérin télescopique et
**en ce que** sont placés dans des rainures annulaires (16) à la zone d'extrémité inférieure des vérins déplaçables (7) et du piston (8) ou aux bords supérieurs du vérin extérieur (6) et des vérins déplaçables (7) des joints d'étanchéité (17, 21, 44) qui s'appliquent, en réalisant une étanchéité, aux parois internes du vérin externe (6) et des vérins déplaçables (7) ou aux parois externes des vérins déplaçables (7) et du piston (8).

2. Dispositif d'amortissement selon la revendication 1, **caractérisé en ce que** le piston (8) du premier étage est pourvu d'un perçage d'aération axial (29, 30).

3. Dispositif d'amortissement selon la revendication 1 ou 2, **caractérisé en ce que** les joints s'étanchéité sont des joints d'étanchéité à lèvre (17, 21) d'une section transversale en forme de V ou de U, et que les rainures en forme de V ou de U ainsi formées des joints d'étanchéité à lèvre sont en liaison à travers des perçages (19,22) dans les parois externes des rainures avec les enceintes de vérin.

4. Dispositif d'amortissement selon l'une des revendications 1 à 3, **caractérisé en ce qu'**il est appliqué sur les parois des espaces creux cylindriques une graisse (42) hautement visqueuse, et que le piston du premier étage est pourvu d'un perçage d'aération axial.

5. Dispositif d'amortissement selon l'une des revendications 1 à 4, **caractérisé en ce que** le piston (8) et les vérins déplaçables (7) sont pourvus chacun d'un bord en forme de bride qui, en position sortie du vérin télescopique, s'applique à un collet annulaire (9,20) prévu respectivement à l'extrémité extérieure du vérin de base extérieur (6) et des vérins déplaçables (7) et diminuant le diamètre de ceux-ci.

6. Dispositif d'amortissement selon l'une des revendications 1 à 5, **caractérisé en ce que** dans les rainures annulaires des collets sont placés des joints d'étanchéité annulaires (44) qui s'appliquent d'une manière étanche à l'arbre (24) du piston (41) et aux côtés extérieurs des vérins mobiles (7).

7. Dispositif d'amortissement (1) pour des parties de meuble mobiles (3), comme par exemple des portes ou des tiroirs, constitué d'un vérin télescopique à au moins deux étages qui est sollicité par une force de ressort dans sa position sortie et est rempli d'un milieu coulant, de préférence d'huile, qui, lors de l'entrée du vérin télescopique est refoulée,
**caractérisé en ce qu'**un ressort de pression (13) est mis en tension entre le fond (11) du vérin extérieur (6) du dernier étage et le piston (8) du premier étage du vérin télescopique,
**en ce que** le piston et les vérins déplaçables sont pourvus chacun d'un bord en forme de bride qui, en position sortie du vérin télescopique, s'applique à un collet annulaire (9) prévu respectivement à l'extrémité extérieure du vérin de base extérieur (6) et des vérins déplaçables (7) et diminuant le diamètre de ceux-ci et
**en ce que** sont placées dans des rainures annulaires des collets des joints d'étanchéité annulaires qui rendent étanches les espaces annulaires (52, 53) entre le piston et les bords en forme de bride et les collets, et
**en ce que** les bords en forme de bride sont pourvus de perçages d'étranglement (51).

8. Dispositif d'amortissement selon la revendication 1, **caractérisé en ce que** le diamètre des vérins (6, 7) est plus grand que leur longueur.

9. Dispositif d'amortissement selon l'une des revendications précédentes, **caractérisé en ce que** le diamètre du piston (8) est plus grand que sa longueur avec la tige de piston (24).

10. Dispositif d'amortissement selon l'une des revendications précédentes, **caractérisé en ce que** le vérin de base extérieur (6) est fermé par une plaque de fond (11) placée sur celui-ci.

11. Dispositif d'amortissement selon l'une des revendications précédentes, **caractérisé en ce que** le piston (8) du premier étage ou l'arbre (24) relié à celui-ci est pourvu d'un capuchon (27) recevant les coups.

12. Dispositif d'amortissement selon l'une des revendications précédentes, **caractérisé en ce que** le vérin de base extérieur (6), les vérins déplaçables (7) et le piston (8) sont constitués de parties moulées par injection en matériau synthétique ou moulées par pression en métal.

13. Dispositif d'amortissement selon l'une des revendications précédentes, **caractérisé en ce que** pour la retenue du ressort de pression (13), la plaque de fond (11) est pourvue d'une saillie (12) en forme de tenon et le piston (8) d'un perçage (14) formant trou borgne.
